# FASCICULE DE BREVET EUROPEEN

(11) **EP 4 380 835 B1**
(45) Date de publication et mention de la délivrance du brevet: **02.09.2026**
(21) Numéro de dépôt: 22744780.2
(22) Date de dépôt: 25.07.2022
(51) Int. Cl.: B60W 20/20, B60K 6/445, B60K 6/442, B60K 6/547, B60W 10/06, B60W 10/08, B60W 10/113, B60W 10/26, B60W 20/14, B60W 20/30, B60W 20/40

(54) **UNITÉ DE COMMANDE D'UNE BOÎTE DE VITESSES AUTOMATIQUE, PROCÉDÉ ET VÉHICULE ASSOCIÉS**
STEUEREINHEIT EINES AUTOMATISCHEN GETRIEBES, ENTSPRECHENDES VERFAHREN UND FAHRZEUG
CONTROL UNIT OF AN AUTOMATIC GEARBOX, ASSOCIATED METHOD AND VEHICLE

(30) Priorité: 03.08.2021 FR 2108436
(43) Date de publication de la demande: 12.06.2024
(73) Titulaire: Renault s.a.s, 92100 Boulogne Billancourt (FR)
(72) Inventeur: KONTOPOULOS, Vasileios, 91510 Lardy (FR); LEFEVRE, Aurelien, 91510 Lardy (FR)
(86) Numéro de dépôt international: PCT/EP2022/070830
(87) Numéro de publication internationale: WO 2023/011963

(56) Documents cités:
- US-A1- 2016 236 671
- US-B2- 9 566 976

## Description

La présente invention concerne une unité de commande de boîte de vitesses pour véhicule automobile hybride.

La présente invention concerne plus particulièrement une unité de commande de boîte de vitesses pour un véhicule automobile possédant un mode hybride série, un procédé de mise en œuvre d'une telle unité et un véhicule automobile hybride comportant une boîte de vitesses automatique pilotée par une telle unité.

Généralement un véhicule automobile hybride comprend un groupe motopropulseur comportant un moteur électrique de traction associé à une batterie, un moteur thermique et une boîte de vitesses reliant lesdits moteurs à des roues de propulsion du véhicule.

Classiquement, le groupe motopropulseur peut être piloté dans un mode de fonctionnement exclusivement électrique dans lequel le moteur thermique est découplé de la boîte de vitesses et le moteur électrique de traction est relié aux roues du véhicule.

Lors de phases de décélération du véhicule pilotées par exemple par le conducteur du véhicule, le groupe motopropulseur fonctionne exclusivement électriquement.

Le moteur électrique de traction entraîné par les roues fonctionne en mode générateur d'énergie électrique et charge la batterie, le moteur thermique découplé ne consommant pas de puissance mécanique. La récupération de l'énergie cinétique de décélération du véhicule en énergie électrique est ainsi optimisée.

En outre, le fonctionnement du véhicule en mode exclusivement électrique lors des phases de décélération permet d'améliorer l'agrément de conduite.

Cependant, lors de phases de décélération, la batterie peut être incapable de stocker l'énergie électrique produite par la machine électrique de traction en mode générateur, notamment lorsqu'elle est pleine ou défaillante.

Lorsque la batterie n'a plus la capacité de stocker de l'énergie, la machine électrique de traction ne génère plus de couple résistif (« frein moteur ») sur les roues de sorte que le véhicule ne décélère pas.

Il est donc nécessaire de sélectionner un état de chaîne cinématique du groupe motopropulseur permettant de décélérer le véhicule tel que demandé par le conducteur.

On rappelle qu'un état de chaîne cinématique est défini par une combinaison d'état(s) de coupleur(s) et d'état(s) de réducteur(s) spécifiques à une architecture de groupe motopropulseur d'un véhicule donnée.

Pour une boîte de vitesses d'un véhicule thermique, un d'état de chaîne cinématique est par exemple un état réducteur de première engagé et un embrayage entre le moteur thermique et la boîte de vitesses fermé. Pour une boîte de vitesse d'un véhicule hybride, un état de chaîne cinématique correspond par exemple à un embrayage ouvert entre le moteur thermique et la boîte de vitesse reliée aux roues avant et dans lequel les moteurs électriques propulsent le véhicule par les roues arrière.

Il est donc proposé de pallier tout ou partie des inconvénients des groupes motopropulseurs pour véhicule hybride selon l'état de la technique lors des phases de décélération, notamment en améliorant la décélération du véhicule lorsque la batterie n'est pas en capacité d'absorber la totalité de l'énergie électrique produite par le moteur électrique de traction

Au vu de ce qui précède, l'invention a pour objet un procédé de contrôle de boîte de vitesses automatique pour véhicule automobile hybride selon la revendication 1 annexée.

L'invention a également pour objet une unité de commande d'une boîte de vitesses automatique pour véhicule automobile hybride selon la revendication 9 annexée.

L'invention a encore pour objet un véhicule automobile hybride selon la revendication 10 annexée.

D'autres buts, caractéristiques et avantages de l'invention apparaîtront à la lecture de la description suivante, donnée uniquement à titre d'exemple non limitatif, et faite en référence aux dessins annexés sur lesquels :

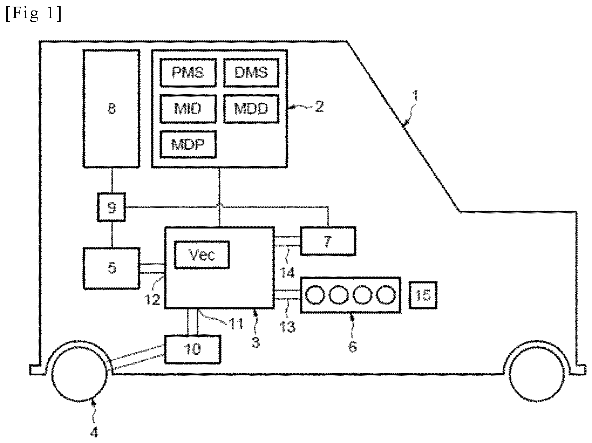

[Fig 1] illustre schématiquement un véhicule automobile hybride selon l'invention ; et
[Fig 2] illustre schématiquement un exemple de mise en œuvre d'une unité de commande de boîte de vitesse automatique selon l'invention.

Le véhicule automobile hybride 1 comprend une unité de commande 2, une boîte de vitesse automatique 3 entraînant des roues 4 du véhicule et pilotée par l'unité de commande 2, un moteur électrique de traction 5 relié mécaniquement à la boîte de vitesses 3, un moteur thermique 6 de propulsion relié mécaniquement à la boîte de vitesses 3, un moteur électrique additionnel 7 relié mécaniquement au moteur thermique 6 de propulsion, et une batterie 8 de traction reliée aux moteurs de propulsion 5 et additionnel 7.

Le moteur électrique additionnel 7 est relié au moteur thermique 6 par l'intermédiaire de la boîte de vitesses 3.

En variante, le moteur électrique additionnel 7 peut être relié au moteur thermique 6 par l'intermédiaire d'un embrayage extérieur à la boîte de vitesses ou par un moyen de transmission permanant.

Le véhicule 1 peut en outre comprendre un contrôleur de puissance 9 pilotant les flux d'énergie électrique entre le moteur électrique de traction 5, le moteur électrique additionnel 7 et la batterie 8, et un différentiel 10 reliant une sortie 11 de la boîte de vitesses aux roues 4.

La boîte de vitesses 3 comprend une première entrée 12 reliée au moteur électrique de traction 5, une deuxième entrée 13 reliée au moteur thermique 6 et une troisième entrée 14 reliée au moteur électrique additionnel 7.

La boîte de vitesses 3 comprend des états de chaîne cinématique hybride série EcH dans lesquels le moteur électrique de traction 5 est relié mécaniquement aux roues 4, le moteur électrique additionnel est relié au moteur thermique 6 qui n'est pas relié mécaniquement aux roues 4, des états de chaîne cinématique électrique EcE dans lesquels seul le moteur électrique de traction 5 est mécaniquement relié aux roues 4, et des états de chaîne cinématique thermique EcT dans lesquels le moteur thermique 6 est mécaniquement relié aux roues 4, le moteur de traction 5 étant ou n'étant pas relié mécaniquement aux roues 4.

Les états de chaîne cinématique EcH, EcE et EcT forment un vecteur des états cinématiques VeC.

On suppose que la boîte de vitesses 3 comprend deux états de chaîne cinématique hybride série EcH1 et EcH2 ayant respectivement un rapport de démultiplication IcH1 et IcH2 entre la première entrée 12 et les roues 4, deux états de chaîne cinématique électrique EcE1 et EcE2 ayant respectivement un rapport de démultiplication IcE1 et IcE2, et six états de chaîne cinématique thermique EcT1, EcT2, EcT3, EcT4, EcT5 et EcT6 ayant respectivement un rapport de démultiplication IcT1, IcT2, IcT3, IcT4, IcT5 et IcT6.

Les états de chaîne cinématique thermique EcT1, EcT2 correspondent à une liaison mécanique exclusive entre les roues 4 et le moteur thermique 6, les états de chaîne cinématique thermique EcT3, EcT4 correspondent à une liaison mécanique entre les roues 4 et le moteur thermique 6 selon le rapport de démultiplication IcT1 et une liaison mécanique entre les roues 4 et le moteur de traction 5 selon le rapport de démultiplication IcE1 et IcE2, et les états de chaîne cinématique thermique EcT5, EcT6 correspondent à une liaison mécanique entre les roues 4 et le moteur thermique 6 selon le rapport de démultiplication IcT2 et une liaison mécanique entre les roues 4 et le moteur de traction 5 selon le rapport de démultiplication IcE1 et IcE2.

Le vecteur des états cinématiques VeC est égal à : $VeC = \left(\begin{matrix}EcH 1 \\ EcH 2 \\ EcE 1 \\ EcE 2 \\ EcT 1 \\ EcT 2 \\ EcT 3 \\ EcT 4 \\ EcT 5 \\ EcT 6\end{matrix}\right)$

On note EM_RAT le vecteur des rapports de démultiplication de la machine électrique de traction sur les états de chaîne cinématique hybride série EcH1 et EcH2 : $EM _ RAT = \left(\begin{matrix}IcH 1 \\ IcH 2\end{matrix}\right)$

Bien entendu, le nombre d'état de chaîne cinématique hybride série EcH, électrique EcE et thermique EcT peut être différent, chaque état cinématique EcH, EcE, EcT étant au moins au nombre de un.

L'unité de commande 2 comprend :
- des premiers moyens de sélection PMS pour sélectionner un état de chaîne cinématique parmi un état de chaîne cinématique électrique EcE, et un état de chaîne cinématique hybride série EcH, selon une consigne de décélération cible, des pertes de couplage TRANS_LOSS_TQ et selon le niveau de charge de la batterie 8 de traction. Le niveau de charge de la batterie 8 est déterminé selon la tension BAT_VOLT à ses bornes,
- des deuxièmes moyens de sélection DMS pour sélectionner un état de chaîne cinématique parmi un état de chaîne cinématique hybride série EcH et un état de chaîne cinématique thermique EcT selon la vitesse du véhicule VEH_SPD, des valeurs de décélération minimale des états de chaîne cinématique MIN_DL_ACEL et une consigne de pilotage BRK_LEVR_PSN de la boîte de vitesses 3,
- des moyens d'identification MID pour identifier au moins un état de chaîne cinématique hybride série EcH de manière à générer une décélération du véhicule égale à une consigne de décélération véhicule,
- des moyens de détermination MDD pour déterminer un vecteur de pilotage DL_DECL_A VL_CS de la boîte de vitesse comportant au moins un état de chaîne cinématique selon l'état de chaîne cinématique sélectionné par les premier et deuxième moyens de sélection PMS, DMS, et le résultat de l'identification des moyens d'identification MID, et
- des moyens de pilotage MDP pour piloter la boîte de vitesses 3 selon le vecteur de pilotage DL_DECL_AVL_CS de sorte qu'une première partie de l'énergie générée par le moteur électrique de traction 5 entraîné par les roues 4 est stockée dans la batterie de traction 8, et une deuxième partie de l'énergie générée alimente le moteur électrique additionnel 7 entraînant le moteur thermique 6 lorsque l'état de chaîne cinématique est un état de chaîne cinématique hybride série EcH.

La consigne de décélération véhicule comprend un premier vecteur de booléens DL_DECL_AVL dans lequel les états de chaîne cinématique produisant une décélération minimale égale à une consigne de décélération requise du véhicule, ladite consigne étant fournie par exemple par un calculateur du véhicule et déterminée par une table de valeurs de décélération selon la consigne de pilotage BRK_LEVR_PSN de la boîte de vitesses 3. L'état logique haut du vecteur DL_DECL_AVL, par exemple « 1 », indique qu'un état de chaîne cinématique produit la décélération requise.

La consigne de décélération cible comprend un vecteur de décélération DECEL_TQ_TG comportant des couples de décélération cible aux roues 4 associés aux états de chaîne cinématique hybride série EcH1, EcH2.

Si un état de chaîne cinématique hybride n'est pas compatible avec la vitesse du véhicule VEH_SPD, la valeur du couple dudit état est par exemple nulle. $DECEL _ TQ _ TG = \left(\begin{matrix}EcH 1 \\ EcH 2\end{matrix}\right)$

On note BAT_CHRG_TRAC_MAX_POW la puissance maximale de charge de la batterie 8 qui est égale à la puissance de recharge maximale de la batterie additionnée de la consommation électrique des accessoires électriques du véhicule 1, EM_SPEED le vecteur des vitesses de rotation de la machine électrique de traction 5 sur les états hybrides séries EcH1, EcH2 calculé à partir des rapports de démultiplications des états chaines cinématiques IcH1, IcH2 et de la vitesse véhicule VEH_SPD, TRANS_LOSS_TQ le vecteur des pertes de couple liées au couplage de la machine électrique de traction 5 sur les états hybrides séries EcH1, EcH2.

Les vecteurs DECEL_TQ_TG, TRANS_LOSS_TQ, MIN_DL_ACEL, et la consigne de pilotage BRK_LEVR_PSN sont transmis par un calculateur de contrôle moteur 15.

La consigne de pilotage BRK_LEVR_PSN est transmise au calculateur de contrôle moteur 15 par le conducteur du véhicule 1 par l'intermédiaire d'une interface homme machine comportant par exemple un levier de vitesse, un bouton ou des palettes situées sur le volant.

On note SER_HEV_DL_LIST un deuxième vecteur booléen indiquant les coordonnés des états de chaîne cinématique hybride série.

L'état logique haut dans le vecteur SER_HEV_DL_LIST, par exemple « 1 », indique les états de chaîne cinématique hybride série : $SER _ HEV _ DL _ LIST = \left(\begin{matrix}1 \\ 1 \\ 0 \\ 0 \\ 0 \\ 0 \\ 0 \\ 0 \\ 0 \\ 0\end{matrix}\right)$

On note ENG_DL_LIST un troisième vecteur booléen indiquant les coordonnés des états de chaîne cinématique thermique EcT. L'état logique haut, par exemple « 1 » indique les états de chaîne cinématique thermique : $ENG _ DL _ LIST = \left(\begin{matrix}0 \\ 0 \\ 0 \\ 0 \\ 1 \\ 1 \\ 1 \\ 1 \\ 1 \\ 1\end{matrix}\right)$

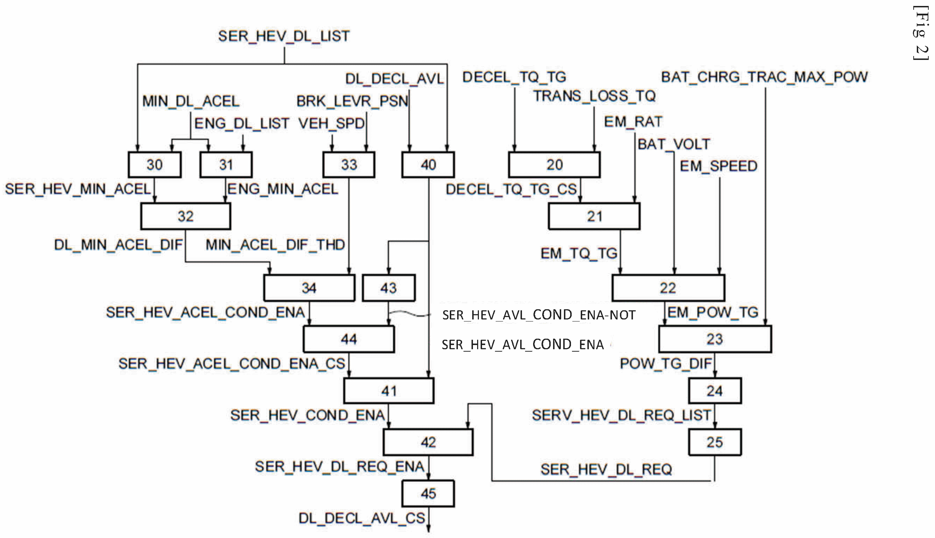

La figure 2 illustre un exemple de mise en œuvre de l'unité de commande 2.

Les premiers moyens PMS sélectionnent un état de chaîne cinématique parmi un état de chaîne cinématique électrique et un état de chaîne cinématique hybride série (étapes 20 à 25). Les étapes sont à présent détaillées.

Les premiers moyens PMS déterminent si une partie de l'énergie récupérée par la décélération du véhicule 1 nécessite d'être dissipée par la rotation du moteur thermique 6 entrainé par le moteur électrique additionnel 7 en sélectionnant un état chaîne cinématique hybride série pour garantir la décélération du véhicule 1.

Les premiers moyens PMS déterminent une consigne de couple cible EM_TQ_TG de la machine électrique de traction pour chaque état de chaîne cinématique hybride série EcH1, EcH2 (étapes 20 et 21).

Le vecteur de consigne de couple EM_TQ_TG est déterminé à partir de la consigne de décélération cible DECEL_TQ_TG, du rapport de démultiplication EM_RAT dudit état de chaîne cinématique hybride série et du vecteur des pertes de couplage TRANS_LOSS_TQ.

Dans l'étape 20, les premiers moyens PMS déterminent un couple cible DECEL_TQ_TG_CS aux roues 4 de chaque état EcH1, EcH2 selon l'équation suivante : $DECEL_TQ_TG_CS = DECEL_TQ_TG - TRANS_LOSS_TQ$

Puis durant l'étape 21, les premiers moyens PMS détermine la consigne de couple EM_TQ_TG sur l'arbre de la machine de traction 5 selon l'équation suivante : $EM_TQ_TG = DECEL_TQ_TG_CS / EM_RAT$

Pour chaque état de chaîne cinématique hybride série, les premiers moyens PMS déterminent une puissance électrique excédentaire POW_TG_DIFF égale à la différence entre la puissance EM_POW_TG de la machine électrique de traction 5 générée en fonction de la consigne de couple EM_TQ_TG, de la vitesse du véhicule EM_SPEED et de la tension de la batterie BAT_VOLT, et la capacité de stockage BAT_CHRG_TRAC_MAX_POW de la batterie de traction 8 (étapes 22 et 23). Pour cela, durant l'étape 22, à partir de la consigne de couple EM_TQ_TG, de la tension BAT_VOLT et de la vitesse EM_SPEED, les premiers moyens PMS déterminent la puissance électrique EM_POW_TG pour chaque état EcH1, EcH2 selon l'équation suivante : $EM_POW_TG = EM_POW_LOSS + EM_POW_EFF * EM_TQ_TG$ où EM_POW_LOSS et EM_POW_EFF sont des coefficients caractéristiques des pertes et de la puissance utile de la machine 5 déterminés selon la tension BAT_VOLT et la vitesse EM_SPEED, le coefficient EM_POW_LOSS ayant pour unité des watt et le coefficient EM_POW_EFF ayant pour unité des watt par newton-mètre.

Puis durant l'étape 23, les premiers moyens PMS déterminent la puissance électrique excédentaire POW_TG_DIFF pour chaque état EcH1, EcH2 : $POW_TG_DIFF = EM_POW_TG - BAT_CHRG_TRAC_MAX_POW$

A l'étape 24, les premiers moyens PMS comparent la puissance électrique excédentaire POW_TG_DIFF de chaque état de chaîne cinématique hybride série EcH1, EcH2 à des seuils de puissance POW_TG_DIF_THD_H et POW_TG_DIF_THD_L, la valeur de POW_TG_DIF_THD_H étant supérieure à celle du seuil POW_TG_DIF_THD_L pour définir un vecteur de booléens SER_HEV_DL_REQ_LIST représentatif des états de chaîne cinématique hybride série EcH1, EcH2 aptes à consommer une partie de l'énergie électrique générée par la machine électrique de traction 5 par l'intermédiaire de la machine électrique additionnel 7 entraînant le moteur thermique 6 pour dissiper ladite partie d'énergie électrique sous forme de chaleur dissipée par le moteur 6.

Si la puissance électrique excédentaire POW_TG_DIFF est supérieure au seuil POW_TG_DIF_THD_H, la valeur de la coordonné de l'état de chaîne cinématique hybride série EcH1, EcH2 associé est égale à l'état logique haut par exemple « 1 ».

Si la puissance électrique excédentaire POW_TG_DIFF est inférieure au seuil POW_TG_DIF_THD_L, la valeur de la coordonné de l'état de chaîne cinématique hybride série EcH1, EcH2 associée est égale à l'état logique bas par exemple « 0 ».

Les seuils POW_TG_DIF_THD_H et POW_TG_DIF_THD_L sont définis empiriquement de manière à trouver le meilleur compromis en termes d'agrément de conduite du passage d'un état de chaîne cinématique électrique vers un état de chaîne cinématique hybride série et inversement.

A l'étape 25, les premiers moyens PMS effectuent une troisième sélection d'un état de chaîne cinématique parmi un état de chaîne cinématique hybride série et un état de chaîne cinématique électrique selon les coordonnées du vecteur de booléens SER_HEV_DL_REQ_LIST.

Les premiers moyens PMS déterminent un vecteur booléen de requête d'utilisation des états hybrides séries SER_HEV_DL_REQ.

Si au moins l'une des coordonnées du vecteur de booléens SER_HEV_DL_REQ_LIST est à l'état logique haut, par exemple « 1 », le booléen SER_HEV_DL_REQ est à l'état logique haut, par exemple « 1 » de sorte que l'état de chaîne cinématique hybride série est sélectionné par les premiers moyens PMS.

Si aucune des coordonnées du vecteur de booléens SER_HEV_DL_REQ_LIST est à l'état logique haut, par exemple « 1 », le booléen SER_HEV_DL_REQ est à l'état logique bas, par exemple « 0 » de sorte que l'état de chaîne cinématique électrique est sélectionné par les premiers moyens PMS.

Les deuxièmes moyens DMS sélectionnent un état de chaîne cinématique parmi un état de chaîne cinématique thermique EcT1 à EcT6 et un état de chaîne cinématique hybride série EcH1, EcH2 selon la vitesse du véhicule VEH_SPD, des valeurs de décélération minimale MIN_DL_ACEL des états de chaîne cinématique et une consigne de pilotage BRK_LEVR_PSN de la boîte de vitesses 3 (étapes 30 à 34).

Les deuxièmes moyens DMS calculent pour l'ensemble des états de chaîne cinématique hybride série EcH1, EcH2 et des états de chaîne cinématique thermique EcT1 à EcT6, la différence DL_MIN_ACEL_DIF entre les valeurs de décélération minimale desdits états de chaîne cinématique hybride série SER_HEV_MIN_ACEL et thermique ENG_MIN_ACEL (étapes 30 à 32). Les étapes sont à présent détaillées.

Durant l'étape 30, les deuxièmes moyens DMS recherchent dans le vecteur MIN_DL_ACEL la valeur de décélération minimale des états de chaîne cinématique hybride série en comparant les coordonnées dudit vecteur avec celles du vecteur SER_HEV_DL_LIST indiquant les états de chaîne cinématique hybride série, et délivrent la valeur SER_HEV_MIN_ACEL contenant ladite décélération minimale.

De manière analogue, durant l'étape 31, les deuxièmes moyens DMS délivrent des valeurs ENG_MIN_ACEL contenant la valeur de décélération minimale de chaque état de chaîne cinématique thermique déterminées à partir des vecteurs MIN_DL_ACEL et ENG_DL_LIST.

Durant l'étape 32, les valeurs ENG_MIN_ACEL sont soustraites à la valeur SER_HEV_MIN_ACEL afin de déterminer le surplus de décélération fourni par la valeur minimale des valeurs de décélération minimale des états de chaînes cinématiques série hybride et thermique, le surplus de décélération étant stocké dans une valeur DL_MIN_ACEL_DIF.

Durant l'étape 33, les deuxième moyens DMS déterminent un seuil de décélération MIN_ACEL_DIF_THD défini à partir de la consigne de pilotage BRK_LEVR_PSN de la boîte de vitesses 3 et de la vitesse VEH SPD du véhicule 1.

Le seuil MIN_ACEL_DIF_THD est déterminé à partie de tables prédéterminées et stockées par exemple dans l'unité 2 reliant la consigne de pilotage BRK_LEVR_PSN de la boîte de vitesses 3 et de la vitesse VEH SPD du véhicule 1 audit seuil.

Durant l'étape 34, les deuxième moyens DMS comparent la valeur DL_MIN_ACEL_DIF au seuil de décélération MIN_ACEL_DIF_THD afin de déterminer si l'écart de décélération est suffisamment important pour favoriser les états de chaîne cinématique hybride série par rapport aux états de chaîne cinématique thermique.

Si la valeur DL_MIN_ACEL_DIF est supérieure au seuil MIN_ACEL_DIF_THD, les deuxième moyens DMS génèrent un booléen SER_HEV_ACEL_COND_ENA par exemple à l'état logique haut, par exemple « 1 » et dans le cas contraire à l'état logique bas, par exemple « 0 ».

L'état logique haut du booléen SER_HEV_ACEL_COND_ENA est indicatif de l'état de chaîne cinématique hybride série sélectionné par les deuxièmes moyens DMS, et l'état logique bas du booléen SER_HEV_ACEL_COND_ENA est indicatif de l'état de chaîne cinématique thermique sélectionné par les deuxième moyens DMS.

Durant des étapes 40 à 43, les moyens d'identification MID identifient au moins un état de chaîne cinématique hybride série EcH de manière à générer une décélération du véhicule égale à la consigne de décélération véhicule, et les moyens de détermination MDD déterminent au moins un état de chaîne cinématique selon l'état de chaîne cinématique sélectionné par les premier et deuxième moyens de sélection PMS, DMS, et le résultat de l'identification des moyens d'identification MID.

Durant l'étape 40, les moyens d'identification MID déterminent si au moins un état de chaîne cinématique hybride série génère une décélération du véhicule égale à la consigne de décélération véhicule 1.

Les moyens d'identification MID déterminent si les vecteurs SER_HEV_DL_LIST et DL_DECL_AVL comportent chacun au moins un état logique haut.

Si le vecteur SER_HEV_DL_LIST et le vecteur DL_DECL_AVL comportent chacun au moins un état logique haut, les moyens d'identification MID génèrent un booléen SER_HEV_AVL_COND_ENA à l'état logique haut indicatif d'une cinquième sélection d'un état de chaîne cinématique hybride série.

Dans le cas contraire, les moyens d'identification MID génèrent le booléen SER_HEV_AVL_COND_ENA à l'état logique bas indicatif d'un état de chaîne cinématique différent du type hybride série.

Si la cinquième sélection comprend l'état de chaîne cinématique hybride série (étape 40), le booléen SER_HEV_AVL_COND_ENA est à l'état logique haut. Les moyens d'identification MID génèrent à l'étape 41 un booléen SER_HEV_COND_ENA à l'état haut.

Puis à l'étape 42, si le booléen SER_HEV_DL_REQ est à l'état logique haut et comme le booléen SER_HEV_COND_ENA est à l'état logique haut, les moyens d'identification MID génèrent un booléen SER_HEV_DL_REQ_ENA à l'état logique haut.

Si le booléen SER_HEV_DL_REQ est à l'état logique bas et que le booléen SER_HEV_COND_ENA est à l'état logique haut, les moyens d'identification MID génèrent un booléen SER_HEV_DL_REQ_ENA à l'état logique bas.

Si le booléen SER_HEV_AVL_COND_ENA est à l'état logique bas, à l'étape 43, les moyens d'identification MID génèrent le booléen SER_HEV_AVL_COND_ENA-NOT à l'état logique haut ou à l'état logique bas si le booléen SER_HEV_AVL_COND_ENA à l'état logique haut.

Si à l'étape 44, le booléen SER_HEV_ACEL_COND_ENA est à l'état logique bas ou le booléen SER_HEV_AVL_COND_ENA-NOT est à l'état logique bas, les moyens MID génèrent un booléen SER_HEV_ACEL_COND_ENA_CS à l'état logique bas, et les moyens d'identification MID génèrent à l'étape 41 le booléen SER_HEV_COND_ENA à l'état bas puis on poursuit à l'étape 42.

Si à l'étape 44, le booléen SER_HEV_ACEL_COND_ENA est à l'état logique haut et le booléen SER_HEV _A VL_COND_ENA-NOT est à l'état haut, le booléen SER_HEV_COND_ENA est à l'état logique haut, et les moyens d'identification MID génèrent à l'étape 41 le booléen SER_HEV_COND_ENA à l'état logique haut puis on poursuit à l'étape 42.

A l'étape 42, si le booléen SER_HEV_COND_ENA est à l'état logique bas ou si l'état de l'état logique du booléen SER_HEV_DL_REQ est bas, les moyens d'identification MID génèrent le booléen SER_HEV_DL_REQ_ENA à l'état logique bas.

A l'étape 45, si le booléen SER_HEV_DL_REQ_ENA est à l'état logique haut, les moyens de détermination MDD déterminent un vecteur de pilotage DL_DECL_AVL_CS comportant l'ensemble des états de chaîne cinématique hybride série, thermique et électrique, dans lequel les coordonnées des états de chaîne cinématique hybride série sont activées et les coordonnées associées à au moins un autre état de chaîne cinématique qu'hybride série sont désactivées par exemple en assignant un état logique bas par exemple « 0 » aux coordonnées des états de chaîne cinématique électrique et thermique. $DL_DECL_AVL_CS = \left(\begin{matrix}EcH 1 \\ EcH 2 \\ 0 \\ 0 \\ 0 \\ 0 \\ 0 \\ 0 \\ 0 \\ 0\end{matrix}\right)$

Si le booléen SER_HEV_DL_REQ_ENA est à l'état logique bas, les moyens de détermination MDD déterminent le vecteur de pilotage DL_DECL_AVL_CS dans lequel les coordonnées de l'ensemble des états de chaîne cinématique produisant une décélération minimale égale à la consigne de décélération véhicule sont activées et les coordonnées des états de chaîne cinématique restant sont désactivées par exemple en assignant un état logique bas par exemple « 0 » audites coordonnées.

Le vecteur de pilotage DL_DECL_AVL_CS est égal au vecteur DL_DECL_AVL.

Le vecteur DL_DECL_AVL_CS est déterminé par les moyens de détermination MDD à partir du vecteur DL_DECL_AVL contenant l'ensemble des états de chaîne cinématique produisant une décélération minimale égale à la consigne de décélération véhicule.

Si le vecteur DL_DECL_AVL_CS comprend plusieurs états de chaîne cinématique, les moyens de détermination MDD déterminent pour chaque état du vecteur de pilotage l'énergie électrique dissipée et sélectionnent l'état générant le moins de pertes.

L'état de chaîne cinématique sélectionné ou si un seul état de chaîne cinématique est stocké dans le vecteur DL_DECL_AVL_CS est transmis aux moyens de pilotage MDP qui pilotent la boîte de vitesses 3 selon ledit état de chaîne cinématique.

Si l'état de chaîne cinématique transmis aux moyens de pilotage MDP est un état de chaîne cinématique hybride série EcH1, EcH2, les moyens de pilotage MDP pilotent la boîte de vitesses 3 de sorte qu'une première partie de l'énergie générée par le moteur électrique 5 de traction entraîné par les roues 4 est stockée dans la batterie 8 de traction, et une deuxième partie de l'énergie alimente le moteur électrique additionnel 7 entraînant le moteur thermique 6.

Le procédé de commande de la boîte de vitesses automatique 3 permet d'améliorer décélération du véhicule lorsque la batterie n'est pas en capacité d'absorber la totalité de l'énergie électrique produite par le moteur électrique de traction en dissipant l'énergie dans le moteur thermique par l'intermédiaire du moteur électrique additionnel lorsqu'un état de chaîne cinématique hybride série est sélectionné, de sorte que le véhicule 1 ne nécessite pas de composants supplémentaires pour dissiper ladite énergie.

En outre, le procédé de commande peut être mis en œuvre sur tout véhicule hybride comportant une transmission automatique à rapport discret comprenant un état de chaîne cinématique hybride série et un état de chaîne cinématique électrique.

De plus, le procédé est aisément transposable à plusieurs types de boîte de vitesses.

## Revendications

1. Procédé de commande d'une boîte de vitesses automatique (3) pour véhicule automobile hybride (1), comprenant :
- une première sélection d'un état de chaîne cinématique parmi un état de chaîne cinématique électrique dans lequel un moteur électrique de traction (5) est relié aux roues (4) du véhicule (1) par l'intermédiaire de ladite boîte (3) et à une batterie de traction (8), et un état de chaîne cinématique hybride série dans lequel le moteur électrique de traction (5) est en outre électriquement relié à un moteur électrique additionnel (7) mécaniquement relié à un moteur thermique de propulsion (6), la sélection de l'état de chaîne cinématique étant effectuée selon une consigne de décélération cible comprenant un vecteur de décélération comportant des couples de décélération cible aux roues (4) associés aux états de chaîne cinématique hybride série, des pertes de couplage liées au couplage du moteur électrique de traction (5) sur les états de chaîne cinématique hybride série et selon le niveau de charge de la batterie de traction (8),
- une deuxième sélection d'un état de chaîne cinématique parmi un état de chaîne cinématique hybride série et un état de chaîne cinématique thermique dans lequel le moteur thermique (6) est relié aux roues (4) par l'intermédiaire de la boîte de vitesses (3) selon la vitesse du véhicule, des valeurs de décélération minimale des états de chaîne cinématique et une consigne de pilotage de la boîte de vitesse,
- l'identification d'au moins un état de chaîne cinématique hybride série de manière à générer une décélération du véhicule égale à une consigne de décélération véhicule (1),
- la détermination d'un vecteur de pilotage de la boîte de vitesse (3) comportant au moins un état de chaîne cinématique selon l'état de chaîne cinématique sélectionné résultant des première et deuxième sélections, et selon le résultat de l'identification, et la boîte de vitesses (3) étant pilotée selon le vecteur de pilotage déterminé de sorte qu'une première partie de l'énergie générée par le moteur électrique de traction (5) entraîné par les roues (4) est stockée dans la batterie de traction (8), et une deuxième partie de l'énergie alimente le moteur électrique additionnel (7) entraînant le moteur thermique (6) lorsque l'état de chaîne cinématique déterminé est un état de chaîne cinématique hybride série.

2. Procédé selon la revendication 1, dans lequel la première sélection comprend :
- la détermination d'une consigne de couple de la machine électrique de traction (5) pour chaque état de chaîne cinématique hybride série, la consigne de couple étant déterminée à partir de la consigne de décélération cible, des pertes de couplage et du rapport de démultiplication dudit état de chaîne cinématique hybride série,
- pour chaque état de chaîne cinématique hybride série, la détermination d'une puissance électrique excédentaire égale à la différence entre la puissance de la machine électrique de traction (5) générée en fonction de la consigne de couple, de la vitesse du véhicule et de la tension de la batterie de traction (8), et la capacité de stockage de la batterie de traction, et
- la comparaison de la puissance électrique excédentaire de chaque état de chaîne cinématique hybride série à des seuils de puissance, et
- selon le résultat de la comparaison, une troisième sélection d'un état de chaîne cinématique parmi un état de chaîne cinématique hybride série et un état de chaîne cinématique électrique.

3. Procédé selon la revendication 2, dans lequel si la puissance électrique excédentaire d'au moins un état de chaîne cinématique hybride série est supérieure à un seuil de puissance haut, la troisième sélection comprend l'état de chaîne cinématique hybride série, si la puissance électrique excédentaire de chaque état de chaîne cinématique hybride série est inférieure à un seuil de puissance bas inférieure au seuil de puissance haut, la troisième sélection comprend l'état de chaîne cinématique électrique.

4. Procédé selon l'une des revendications 1 à 3, dans lequel la deuxième sélection comprend :
- pour chaque état de chaîne cinématique hybride série et chaque état de chaîne cinématique thermique, le calcul de la différence entre les valeurs de décélération minimale desdits états de chaîne cinématique hybride série et thermique pour déterminer la valeur du surplus de décélération fourni par la valeur minimale des valeurs de décélération minimale des états de chaînes cinématiques série hybride et thermique,
- la comparaison de la valeur de surplus de décélération à un seuil de décélération défini à partir de la consigne de pilotage de la boîte de vitesses (3) et de la vitesse du véhicule, et
- selon le résultat de la comparaison, une quatrième sélection d'un état de chaîne cinématique parmi un état de chaîne cinématique hybride série et un état de chaîne cinématique thermique.

5. Procédé selon la revendication 4, dans lequel si la valeur de décélération minimale d'au moins un état de chaîne cinématique hybride série est supérieure au seuil de décélération, la quatrième sélection comprend l'état de chaîne cinématique hybride série, sinon la quatrième sélection comprend l'état de chaîne cinématique thermique.

6. Procédé selon l'une des revendications 1 à 5, dans lequel l'identification d'au moins un état de chaîne cinématique hybride série de manière à générer une décélération du véhicule égale à une consigne de décélération véhicule comprend :
- si au moins un état de chaîne cinématique hybride série respecte la consigne de décélération véhicule, une cinquième sélection comprenant l'état de chaîne cinématique hybride série,
- si aucun état de chaîne cinématique hybride série respecte la consigne de décélération véhicule, une cinquième sélection comprenant un état de chaîne cinématique différent de l'état de chaîne cinématique hybride série.

7. Procédé selon la revendication 6, dans lequel :
- si la cinquième sélection comprend l'état de chaîne cinématique hybride série et la première sélection comprend l'état de chaîne cinématique hybride série, la détermination du vecteur de pilotage de la boîte de vitesses (3) dans lequel les coordonnées associées à l'au moins un état de chaîne cinématique hybride série sont activées et les coordonnées associés à au moins un autre état de chaîne cinématique qu'hybride série sont désactivées, le vecteur comportant l'ensemble des états de chaîne cinématique hybride série, thermique et électrique,
- si la cinquième sélection comprend l'état de chaîne cinématique différent de l'état de chaîne cinématique hybride série, la première sélection comprend l'état de chaîne cinématique hybride série, et la deuxième sélection comprend l'état de chaîne cinématique hybride série, la détermination du vecteur de pilotage dans lequel les coordonnées associées à au moins un état de chaîne cinématique hybride série sont activées et les coordonnées associés à au moins un autre état de chaîne cinématique qu'hybride série sont désactivées, le vecteur comportant l'ensemble des états de chaîne cinématique hybride série, thermique et électrique, et
- si la première sélection comprend l'état de chaîne cinématique électrique ou si deuxième sélection comprend l'état de chaîne cinématique thermique et la cinquième sélection comprend l'état de chaîne cinématique différent de l'état de chaîne cinématique hybride série, la détermination du vecteur de pilotage dans lequel les coordonnées associés aux états de chaîne cinématique du véhicule produisant une décélération minimale égale à la consigne de décélération véhicule sont activées et les coordonnées associés au moins un autre état de chaîne cinématique du véhicule sont désactivées, le vecteur comportant l'ensemble des états de chaîne cinématique hybride série, thermique et électrique.

8. Procédé selon la revendication 7, dans lequel si le vecteur de pilotage comprend des coordonnées associées à plus d'un état de chaîne cinématique du véhicule, le procédé comprend, pour chaque état de chaîne cinématique du vecteur de pilotage, la détermination de l'énergie électrique dissipée, et la sélection de l'état générant le moins de perte.

9. Unité de commande (2) d'une boîte de vitesses automatique pour véhicule automobile hybride, comportant :
- des premiers moyens de sélection (PMS) configurés pour sélectionner un état de chaîne cinématique parmi un état de chaîne cinématique électrique (EcE) dans lequel un moteur électrique de traction (5) est relié aux roues (4) du véhicule (1) par l'intermédiaire de ladite boîte et à une batterie de traction (8), et un état de chaîne cinématique hybride série (EcH) dans lequel le moteur électrique de traction est en outre électriquement relié à un moteur électrique additionnel mécaniquement relié à un moteur thermique de propulsion (6), selon une consigne de décélération cible comprenant un vecteur de décélération comportant des couples de décélération cible aux roues (4) associés aux états de chaîne cinématique hybride série, des pertes de couplage liées au couplage du moteur électrique de traction (5) sur les états de chaîne cinématique hybride série et selon le niveau de charge de la batterie de traction,
- des deuxièmes moyens de sélection (DMS) configurés pour sélectionner un état de chaîne cinématique parmi un état de chaîne cinématique hybride série (EcH) et un état de chaîne cinématique thermique (EcT) dans lequel le moteur thermique (6) est relié aux roues (4) par l'intermédiaire de la boîte de vitesses (3) selon la vitesse du véhicule (VEH_SPD), des valeurs de décélération minimale des états de chaîne cinématique et une consigne de pilotage (BRK_LEVR_PSN) de la boîte de vitesse,
- des moyens d'identification (MID) configurés pour identifier au moins un état de chaîne cinématique hybride série (EcH) de manière à générer une décélération du véhicule égale à une consigne de décélération véhicule,
- des moyens de détermination (MDD) configurés pour déterminer un vecteur de pilotage (DL_DECL_AVL_CS) de la boîte de vitesses (3) comportant au moins un état de chaîne cinématique selon l'état de chaîne cinématique sélectionné par les première et deuxième moyens de sélection (PMS, DMS), et le résultat de l'identification des moyens d'identification (MID), et
- des moyens de pilotage (MDP) configurés pour piloter la boîte de vitesses (3) selon le vecteur de pilotage déterminé (DL_DECL_AVL_CS) de sorte qu'une première partie de l'énergie générée par le moteur électrique de traction (5) entraîné par les roues (4) est stockée dans la batterie de traction (8), et une deuxième partie de l'énergie alimente le moteur électrique additionnel (7) entraînant le moteur thermique (6) lorsque l'état de chaîne cinématique déterminé est un état de chaîne cinématique hybride série.

10. Véhicule automobile hybride comprenant une unité de commande selon la revendication 9, une boîte de vitesses automatique (3) entraînant des roues (4) du véhicule et pilotée par l'unité de commande (2), un moteur électrique de traction relié mécaniquement à la boîte de vitesses, un moteur thermique de propulsion (6) relié mécaniquement à la boîte de vitesses, un moteur électrique additionnel (7) relié mécaniquement au moteur thermique de propulsion, et une batterie de traction (8) reliée aux moteurs de propulsion et additionnel.

## Patentansprüche

1. Verfahren zur Steuerung eines Automatikgetriebes (3) für ein Hybridkraftfahrzeug (1), umfassend
- ein erstes Auswählen eines Antriebsstrangzustands aus einem Elektroantriebsstrangzustand, in dem ein elektrischer Traktionsmotor (5) über das Getriebe (3) mit den Rädern (4) des Fahrzeugs (1) und mit einer Traktionsbatterie (8) verbunden ist, und einem Seriellhybridantriebsstrangzustand, in dem der elektrische Traktionsmotor (5) ferner elektrisch mit einem zusätzlichen Elektromotor (7) verbunden ist, der mechanisch mit einem Antriebsverbrennungsmotor (6) verbunden ist, wobei das Auswählen des Antriebsstrangzustands entsprechend einem Zielverzögerungssollwert, der einen Verzögerungsvektor umfasst, der Zielverzögerungsdrehmomente an den Rädern (4), die den Seriellhybridantriebsstrangzuständen zugeordnet sind, Kopplungsverluste, die mit der Kopplung des elektrischen Traktionsmotors (5) in den Seriellhybridantriebsstrangzuständen zusammenhängen, beinhaltet, und entsprechend dem Ladestand der Traktionsbatterie (8) erfolgt,
- ein zweites Auswählen eines Antriebsstrangzustands aus einem Seriellhybridantriebsstrangzustand und einem Verbrennungsantriebsstrangzustand, in dem der Verbrennungsmotor (6) über das Getriebe (3) mit den Rädern (4) verbunden ist, entsprechend der Geschwindigkeit des Fahrzeugs, der Mindestverzögerungswerte der Antriebsstrangzustände und einem Ansteuerungssollwert des Getriebes,
- das Identifizieren mindestens eines Seriellhybridantriebsstrangzustands, so dass eine Verzögerung des Fahrzeugs gleich einem Verzögerungssollwert für das Fahrzeug (1) erzeugt wird,
- das Bestimmen eines Ansteuerungsvektors des Getriebes (3), der mindestens einen Antriebsstrangzustand beinhaltet, entsprechend dem gewählten Antriebsstrangzustand, der aus dem ersten und zweiten Auswählen resultiert, und entsprechend dem Ergebnis der Identifizierung, und wobei das Getriebe (3) entsprechend dem bestimmten Ansteuerungsvektor angesteuert wird, so dass ein erster Teil der von dem elektrischen Traktionsmotor (5), der von den Rädern (4) angetrieben wird, erzeugten Energie in der Traktionsbatterie (8) gespeichert wird, und ein zweiter Teil der Energie den zusätzlichen Elektromotor (7) versorgt, der den Verbrennungsmotor (6) antreibt, wenn der bestimmte Antriebsstrangzustand ein Seriellhybridantriebsstrangzustand ist.

2. Verfahren nach Anspruch 1, wobei das erste Auswählen umfasst:
- das Bestimmen eines Drehmomentsollwerts der elektrischen Traktionsmaschine (5) für jeden Seriellhybridantriebsstrangzustand, wobei der Drehmomentsollwert ausgehend von dem Zielverzögerungssollwert, von den Kopplungsverlusten und von dem Übersetzungsverhältnis des Seriellhybridantriebsstrangzustands bestimmt wird,
- für jeden Seriellhybridantriebsstrangzustand das Bestimmen einer überschüssigen elektrischen Leistung gleich der Differenz zwischen der Leistung der elektrischen Traktionsmaschine (5), die in Abhängigkeit von dem Drehmomentsollwert, der Geschwindigkeit des Fahrzeugs und der Spannung der Traktionsbatterie (8) erzeugt wird, und der Speicherkapazität der Traktionsbatterie, und
- das Vergleichen der überschüssigen elektrischen Leistung jedes Seriellhybridantriebsstrangzustands mit Leistungsschwellwerten, und
- entsprechend dem Ergebnis des Vergleichs, ein drittes Auswählen eines Antriebsstrangzustands aus einem Seriellhybridantriebsstrangzustand und einem Elektroantriebsstrangzustand.

3. Verfahren nach Anspruch 2, bei dem, wenn die überschüssige elektrische Leistung mindestens eines Seriellhybridantriebsstrangzustands über einem oberen Leistungsschwellenwert liegt, das dritte Auswählen den Seriellhybridantriebsstrangzustand umfasst, wenn die überschüssige elektrische Leistung jedes Seriellhybridantriebsstrangzustands der Serie unter einem unteren Leistungsschwellenwert liegt, der kleiner als der obere Leistungsschwellenwert ist, das dritte Auswählen den Elektroantriebsstrangzustand umfasst.

4. Verfahren nach einem der Ansprüche 1 bis 3, bei dem das zweite Auswählen umfasst:
- für jeden Seriellhybridantriebsstrangzustand und jeden Verbrennungsantriebsstrangzustand das Berechnen der Differenz zwischen den Mindestverzögerungswerten der Seriellhybrid- und Verbrennungsantriebsstrangzustände, um den Wert der Mehrverzögerung zu bestimmen, die durch den Mindestwert der Mindestverzögerungswerte der Seriellhybrid- und Verbrennungsantriebsstrangzustände bereitgestellt wird,
- das Vergleichen des Werts der Mehrverzögerung mit einem Verzögerungsschwellenwert, der ausgehend von dem Ansteuerungssollwert des Getriebes (3) und der Geschwindigkeit des Fahrzeugs definiert wird, und
- entsprechend dem Ergebnis des Vergleichs, ein viertes Auswählen eines Antriebsstrangzustands aus einem Seriellhybridantriebsstrangzustand und einem Verbrennungsantriebsstrangzustand.

5. Verfahren nach Anspruch 4, bei dem, wenn der Wert der Mindestverzögerung mindestens eines Seriellhybridantriebsstrangzustands über dem Verzögerungsschwellenwert liegt, das vierte Auswählen den Seriellhybridantriebsstrangzustand umfasst, ansonsten das vierte Auswählen den Verbrennungsantriebsstrangzustand umfasst.

6. Verfahren nach einem der Ansprüche 1 bis 5, bei dem das Identifizieren mindestens eines Seriellhybridantriebsstrangzustands, so dass eine Verzögerung des Fahrzeugs gleich einem Fahrzeugverzögerungssollwert erzeugt wird, umfasst:
- wenn mindestens ein Seriellhybridantriebsstrangzustand den Fahrzeugverzögerungssollwert erfüllt, ein fünftes Auswählen, das den Seriellhybridantriebsstrangzustand umfasst;
- wenn kein Seriellhybridantriebsstrangzustand den Fahrzeugverzögerungssollwert erfüllt, ein fünftes Auswählen, das einen Antriebsstrangzustand umfasst, der verschieden von dem Seriellhybridantriebsstrangzustand ist.

7. Verfahren nach Anspruch 6, bei dem:
- wenn das fünfte Auswählen den Seriellhybridantriebsstrangzustand umfasst und das erste Auswählen den Seriellhybridantriebsstrangzustand umfasst, das Bestimmen des Ansteuerungsvektors des Getriebes (3), bei dem die Koordinaten, die dem mindestens einen Seriellhybridantriebsstrangzustand zugeordnet sind, aktiviert werden und die Koordinaten, die mindestens einem anderen als dem Seriellhybridantriebsstrangzustand zugeordnet sind, deaktiviert werden, wobei der Vektor sämtliche Seriellhybrid-, Verbrennungs- und Elektroantriebsstrangzustände umfasst,
- wenn das fünfte Auswählen den von dem Seriellhybridantriebsstrangzustand verschiedenen Antriebsstrangzustand umfasst, das erste Auswählen den Seriellhybridantriebsstrangzustand umfasst und das zweite Auswählen den Seriellhybridantriebsstrangzustand umfasst, das Bestimmen des Ansteuerungsvektors, bei dem die Koordinaten, die mindestens einem Seriellhybridantriebsstrangzustand zugeordnet sind, aktiviert werden und die Koordinaten, die mindestens einem anderen als dem Seriellhybridantriebsstrangzustand zugeordneten sind, deaktiviert werden, wobei der Vektor sämtliche Seriellhybrid-, Verbrennungs- und Elektroantriebsstrangzustände umfasst, und
- wenn das erste Auswählen den Elektroantriebsstrangzustand umfasst oder wenn das zweite Auswählen den Verbrennungsantriebsstrangzustand umfasst und das fünfte Auswählen den von dem Seriellhybridantriebsstrangzustand verschiedenen Antriebsstrangzustand umfasst, das Bestimmen des Ansteuerungsvektors, bei dem die Koordinaten, die den Antriebsstrangzuständen des Fahrzeugs zugeordnet sind, die eine Mindestverzögerung gleich dem Fahrzeugverzögerungssollwert produzieren, aktiviert werden und die Koordinaten, die mindestens einem anderen Antriebsstrangzustand des Fahrzeugs zugeordnet sind, deaktiviert werden, wobei der Vektor sämtliche Seriellhybrid-, Verbrennungs- und Elektroantriebsstrangzustände umfasst.

8. Verfahren nach Anspruch 7, bei dem, wenn der Ansteuerungsvektor Koordinaten umfasst, die mehr als einem Antriebsstrangzustand des Fahrzeugs zugeordnet sind, das Verfahren für jeden Antriebsstrangzustand des Ansteuerungsvektors das Bestimmen der abgegebenen elektrischen Energie und das Auswählen des Zustands, der den geringsten Verlust erzeugt, umfasst.

9. Steuereinheit (2) eines Automatikgetriebes für ein Hybridkraftfahrzeug, beinhaltend:
- erste Auswahlmittel (PMS), die dazu ausgelegt sind, einen Antriebsstrangzustand aus einem Elektroantriebsstrangzustand (EcE), in dem ein elektrischer Traktionsmotor (5) über das Getriebe mit den Rädern (4) des Fahrzeugs (1) und mit einer Traktionsbatterie (8) verbunden ist, und einem Seriellhybridantriebsstrangzustand (EcH), in dem der elektrische Traktionsmotor ferner elektrisch mit einem zusätzlichen Elektromotor verbunden ist, der mechanisch mit einem Antriebsverbrennungsmotor (6) verbunden ist, entsprechend einem Zielverzögerungssollwert auszuwählen, der einen Verzögerungsvektor umfasst, der Zielverzögerungsdrehmomente an den Rädern (4) beinhaltet, die den Seriellhybridantriebsstrangzuständen zugeordnet sind, Kopplungsverluste, die mit der Kopplung des elektrischen Traktionsmotors (5) mit den Seriellhybridantriebsstrangzuständen zusammenhängen, und entsprechend dem Ladestand der Traktionsbatterie,
- zweite Auswahlmittel (DMS), die dazu ausgelegt sind, einen Antriebsstrangzustand aus einem Seriellhybridantriebsstrangzustand (EcH) und einem Verbrennungsantriebsstrangzustand (EcT), in dem der Verbrennungsmotor (6) über das Getriebe (3) mit den Rädern (4) verbunden ist, entsprechend der Geschwindigkeit des Fahrzeugs (VEH_SPD), den Mindestverzögerungswerten der Antriebsstrangzustände und einem Ansteuerungssollwert (BRK_LEVR_PSN) des Getriebes auszuwählen,
- Identifizierungsmittel (MID), die dazu ausgelegt sind, mindestens einen Seriellhybridantriebsstrangzustand (EcH) zu identifizieren, so dass eine Verzögerung des Fahrzeugs gleich einem Fahrzeugverzögerungssollwert erzeugt wird,
- Bestimmungsmittel (MDD), die dazu ausgelegt sind, einen Ansteuerungsvektor (DL_DECL_AVL_CS) des Getriebes (3), der mindestens einen Antriebsstrangzustand beinhaltet, entsprechend dem durch die ersten und zweiten Auswahlmittel (PMS, DMS) ausgewählten Antriebsstrangzustand und dem Ergebnis der Identifizierung der Identifizierungsmittel (MID) zu bestimmen, und
- Ansteuerungsmittel (MDP), die dazu ausgelegt sind, das Getriebe (3) entsprechend dem bestimmten Ansteuerungsvektor (DL_DECL_AVL_CS) anzusteuern, so dass ein erster Teil der von dem elektrischen Traktionsmotor (5), der von den Rädern (4) angetrieben wird, erzeugten Energie in der Traktionsbatterie (8) gespeichert wird, und ein zweiter Teil der Energie den zusätzlichen Elektromotor (7) versorgt, der den Verbrennungsmotor (6) antreibt, wenn der bestimmte Antriebsstrangzustand ein Seriellhybridantriebsstrangzustand ist.

10. Hybridkraftfahrzeug, umfassend eine Steuereinheit nach Anspruch 9, ein Automatikgetriebe (3), das Räder (4) des Fahrzeugs antreibt und von der Steuereinheit (2) gesteuert wird, einen mit dem Getriebe mechanisch verbundenen elektrischen Traktionsmotor, einen mit dem Getriebe mechanisch verbundenen Antriebsverbrennungsmotor (6), einen mit dem Antriebsverbrennungsantriebsmotor mechanisch verbundenen zusätzlichen Elektromotor (7) und eine Traktionsbatterie (8), die mit dem zusätzlichen und dem Antriebsmotor verbunden ist.

## Claims

1. Method for controlling an automatic gearbox (3) for a hybrid motor vehicle (1), comprising:
- a first selection of a driveline state from between an electrical driveline state in which an electric traction motor (5) is connected to the wheels (4) of the vehicle (1) via said gearbox (3) and to a traction battery (8), and a series hybrid driveline state in which the electric traction motor (5) is also electrically connected to an additional electric motor (7) mechanically connected to a propulsion combustion engine (6), the selection of the driveline state being made on the basis of a target deceleration setpoint comprising a deceleration vector comprising target deceleration torques at the wheels (4) which are associated with the series hybrid driveline states, the coupling losses associated with the coupling of the electric traction motor (5) in the series hybrid driveline states, and on the basis of the state of charge of the traction battery (8),
- a second selection of a driveline state from between a series hybrid driveline state and a combustion engine driveline state in which the combustion engine (6) is connected to the wheels (4) via the gearbox (3) on the basis of the speed of the vehicle, of the minimum deceleration values of the driveline states and of a gearbox control setpoint,
- the identification of at least one series hybrid driveline state so as to generate a vehicle deceleration that is equal to a deceleration setpoint for the vehicle (1),
- the determining of a control vector for control of the gearbox (3), comprising at least one driveline state according to the driveline state selected as a result of the first and second selections, and according to the result of the identification, and the gearbox (3) being controlled on the basis of the determined control vector so that a first proportion of the energy generated by the electric traction motor (5) driven by the wheels (4) is stored in the traction battery (8), and a second proportion of the energy powers the additional electric motor (7) that drives the combustion engine (6) when the driveline state determined is a series hybrid driveline state.

2. Method according to Claim 1, wherein the first selection comprises:
- the determining of a torque setpoint for the electric traction machine (5) for each series hybrid driveline state, the torque setpoint being determined from the target deceleration setpoint, the coupling losses and the gearing ratio of said series hybrid driveline state,
- for each series hybrid driveline state, the determining of an excess electrical power equal to the difference between the power of the electric traction machine (5) that is generated as a function of the torque setpoint, of the vehicle speed and of the voltage of the traction battery (8), and the storage capacity of the traction battery, and
- the comparing of the excess electrical power of each series hybrid driveline state against power thresholds, and
- depending on the result of the comparison, a third selection of a driveline state from between a series hybrid driveline state and an electrical driveline state.

3. Method according to Claim 2, wherein if the excess electrical power of at least one series hybrid driveline state is above an upper power threshold, the third selection comprises the series hybrid driveline state, and if the excess electrical power of each series hybrid driveline state is below a lower power threshold lower than the upper power threshold, the third selection comprises the electrical driveline state.

4. Method according to one of Claims 1 to 3, wherein the second selection comprises:
- for each series hybrid driveline state and each combustion engine driveline state, calculating the difference between the minimum deceleration values of said series hybrid and combustion engine driveline states in order to determine the value of the surplus deceleration which is given by the minimum value of the minimum deceleration values of the series hybrid and combustion engine driveline states,
- the comparing of the surplus deceleration value against a deceleration threshold defined on the basis of the control setpoint for the gearbox (3) and of the speed of the vehicle, and
- depending on the result of the comparison, a fourth selection of a driveline state from between a series hybrid driveline state and a combustion engine driveline state.

5. Method according to Claim 4, wherein if the minimum deceleration value of at least one series hybrid driveline state is above the deceleration threshold, the fourth selection comprises the series hybrid driveline state, otherwise the fourth selection comprises the combustion engine driveline state.

6. Method according to one of Claims 1 to 5, wherein the identification of at least one series hybrid driveline state so as to generate a vehicle deceleration that is equal to a deceleration setpoint for the vehicle comprises:
- if at least one series hybrid driveline state conforms to the vehicle deceleration setpoint, a fifth selection comprising the series hybrid driveline state,
- if no series hybrid driveline state conforms to the vehicle deceleration setpoint, a fifth selection comprising a driveline state other than the series hybrid driveline state.

7. Method according to Claim 6, wherein:
- if the fifth selection comprises the series hybrid driveline state and the first selection comprises the series hybrid driveline state, the determining of the control vector for the gearbox (3) wherein the coordinates associated with the at least one series hybrid driveline state are activated and the coordinates associated with at least one driveline state other than series hybrid are deactivated, the vector comprising all of the series hybrid, combustion engine and electrical driveline states,
- if the fifth selection comprises the driveline state other than the series hybrid driveline state, the first selection comprises the series hybrid driveline state, and the second selection comprises the series hybrid driveline state, the determining of the control vector wherein the coordinates associated with at least one series hybrid driveline state are activated and the coordinates associated with at least one driveline state other than series hybrid are deactivated, the vector comprising all of the series hybrid, combustion engine and electrical driveline states, and
- if the first selection comprises the electrical driveline state or if the second selection comprises the combustion engine driveline state and the fifth selection comprises the driveline state other than the series hybrid driveline state, the determining of the control vector wherein the coordinates associated with the vehicle driveline states producing a minimum deceleration equal to the vehicle deceleration setpoint are activated and the coordinates associated with at least one other vehicle driveline state are deactivated, the vector comprising all of the series hybrid, combustion engine and electrical driveline states.

8. Method according to Claim 7, wherein if the control vector comprises coordinates associated with more than one vehicle driveline state, the method comprises, for each driveline state of the control vector, the determining of the electrical energy dissipated, and the selection of the state that generates the lowest losses.

9. Control unit (2) controlling an automatic gearbox for a hybrid motor vehicle, comprising:
- first selection means (PMS) configured to select a driveline state from between an electrical driveline state (EcE) in which an electric traction motor (5) is connected to the wheels (4) of the vehicle (1) via said gearbox and to a traction battery (8), and a series hybrid driveline state (EcH) in which the electric traction motor is also electrically connected to an additional electric motor mechanically connected to a propulsion combustion engine (6), on the basis of a target deceleration setpoint comprising a deceleration vector comprising target deceleration torques at the wheels (4) which are associated with the series hybrid driveline states, the coupling losses associated with the coupling of the electric traction motor (5) in the series hybrid driveline states, and on the basis of the state of charge of the traction battery,
- second selection means (DMS) configured to select a driveline state from between a series hybrid driveline state (EcH) and a combustion engine driveline state (EcT) in which the combustion engine (6) is connected to the wheels (4) via the gearbox (3) on the basis of the speed of the vehicle (VEH_SPD), of the minimum deceleration values of the driveline states and of a gearbox control setpoint (BRK_LEVR_PSN) for the gearbox,
- identification means (MID) configured to identify at least one series hybrid driveline state (EcH) so as to generate a vehicle deceleration that is equal to a deceleration setpoint for the vehicle,
- determination means (MDD) configured to determine a control vector (DL_DECL_AVL_CS) for the gearbox (3) comprising at least one driveline state on the basis of the driveline state selected by the first and second selection means (PMS, DMS) and the result of the identification from the identification means (MID), and
- control means (MDP) configured to control the gearbox (3) on the basis of the determined control vector (DL_DECL_AVL_CS) so that a first proportion of the energy generated by the electric traction motor (5) driven by the wheels (4) is stored in the traction battery (8), and a second proportion of the energy powers the additional electric motor (7) driving the combustion engine (6) when the determined driveline state is a series hybrid driveline state.

10. Hybrid motor vehicle comprising a control unit according to Claim 9, an automatic gearbox (3) driving wheels (4) of the vehicle and controlled by the control unit (2), an electric traction motor connected mechanically to the gearbox, a propulsion combustion engine (6) connected mechanically to the gearbox, an additional electric motor (7) mechanically connected to the propulsion combustion engine, and a traction battery (8) connected to the propulsion motor and additional motor.
